# EUROPEAN PATENT SPECIFICATION

(11) **EP 1 906 199 B1**
(45) Date of publication and mention of the grant of the patent: **10.07.2013**
(21) Application number: 07008918.0
(22) Date of filing: 03.05.2007
(51) Int. Cl.: G01S 19/13, G01S 5/00

(54) **System and methods for secure communications using an enhanced GPS receiver**
System und Verfahren für sichere Kommunikationen über einen erweiterten GPS-Empfänger
Système et procédé pour des communications sécurisées utilisant un récepteur GPS amélioré

(30) Priority: 29.09.2006 US 541470
(43) Date of publication of application: 02.04.2008
(73) Proprietor: Maishi Electronic (Shanghai) Ltd., Zhang Jiang Hi-Tech Park Shanghai 201203 (CN)
(72) Inventor: Haiquan, Huang, Chengdu Sichuan 610041 (CN); Cheng, Li, Chengdu Sichuan 610041 (CN); Huafeng, Qian, Chengdu Sichuan 610041 (CN)
(74) Representative: Lippert, Stachow & Partner

(56) References cited:
- EP-A1- 1 494 488
- WO-A-2004/059337
- US-A- 5 940 509
- US-A- 5 969 673
- US-A1- 2004 106 415
- US-B1- 6 400 824
- US-B1- 6 564 056

## Description

### FIELD OF THE INVENTION

The invention relates to secure data communication, and more particularly, to secure location-based data communication using an enhanced GPS receiver.

### BACKGROUND OF THE INVENTION

With the advent of the Global Positioning System (GPS), there is a growing demand for mobile devices that can locate and track objects or people, such as children, elders, tourists, valuable assets, and the like. Most commonly, GPS receivers are used in the mobile devices. The GPS receiver is capable of receiving GPS signals from GPS satellites and determining the location of the mobile device based on the received GPS signals. The location information may be transmitted by a transmitting unit coupled to the GPS receiver in the mobile device to a terminal such as a monitoring terminal, or a control center. As a result, the monitoring terminal or the control center is able to provide a corresponding response or instruction according to the received location information to the object or people carrying the mobile device or inside the mobile device, such as, a car, a cell phone, etc.

One example of the usage of the GPS receiver is tracking of children by their parents when children are carrying cell phones equipped with a GPS receiver. The GPS receiver is used to determine the location of the child. Location information of the child will thus be transmitted through the cell phone over a wireless network by means of Short Message Service (SMS). At parent side, he or she also has a cell phone capable of receiving the location information related SMS messages. Consequently, parents are able to monitor and track the location of their children.

Another example of the usage of the GPS receiver is a vehicle control system. A vehicle control center needs to collect location information of fleets, such as taxicabs, delivery trucks, etc. to make sure that all the vehicles are within a predetermined geographical boundary. In addition, upon these collected location information, the control center may be able to give dispatch assignment to the fleets. Each vehicle in the fleet is usually equipped with a GPS receiver for obtaining location information. Such location information is transmitted to the control center by a transmitting device in each vehicle. After the control center receives the location information, it analyzes the location information and sends out instructions to the associated vehicle to control their routes.

However, there are several problems with the conventional communication approaches for transmitting the GPS location information. Since the location information is transmitted over the air, it is susceptible to unwanted tampering or interception. Without any identification process or encryption process, the location information can be easily received by other people, thereby causing security issues. Furthermore, GPS location spoofing may occur if the receiving side does not require identification of the sender of the data. In solving the problem, some mobile devices on the market provide an encryption feature. When equipped with GPS receivers, these mobile devices may be able to encrypt the location information received from the GPS receiver and send the encrypted location information to the intended receiver, and thus enhancing the security of data communication. However, the problem with this approach is that the encryption module is integrated in the mobile device. The GPS receiver itself does not include the encryption module. When this GPS receiver is installed on another mobile device, unless the mobile device also provides an encryption module, the GPS location information in transmission is open to public since no encryption is performed. However, if the encryption module is integrated in the GPS receiver instead of the mobile device, no matter what mobile device it is attached to, location information can be encrypted given the fact that the encryption feature are integrated in the GPS receiver.

US 2004/0106415 A1 relates to a position information management system for managing position information of a mobile body that can utilize the position information while securing the protection of the privacy related to the position information of the mobile body. A method for communicating location information between a terminal of the mobile body and a position recording center is disclosed, said terminal of the mobile body having a global position system (GPS) receiver comprising: obtaining location information from said GPS receiver, said location information representing a location of said terminal of the mobile body, obtaining an encryption key to encrypt said location information into an encrypted location information, transmitting said encrypted location information from said terminal of the mobile body to said position recording center, receiving said encrypted location information at said position recording center, decrypting said encrypt location information at said position recording center; and obtaining said location information at said position recording center. International publication WO 2004/059337 A1 refers to a GPS receiver device comprising a GPS signal receiving unit for receiving GPS signals from GPS satellites, GPS signal pre-processing means coupled to said GPS signal receiving unit for pre-processing said GPS signals; encryption means for encrypting said pre-processed GPS signals; and transmission means for transmitting encrypted pre-processed GPS signals to an external device. US 6,400,824 B1 refers to an image device integrating a photo sensing array, compression circuit and an encryption circuit on a single substrate. An optical image can be directly converted into encrypted digital data prior to transmission the image off the chip. A distinct digital number associated with the image device may be superimposed on the digital image as a digital signature of the device. US 6,564,056 B1 refers to a controller for communications-enabled devices that implements a private network of the devices, facilitating secure communications to and from those devices that have been registered with the controller. Security between controller and intelligent devices is done via standard internet private and public key encryption/decryption mechanisms, i.e. the controller encrypts data for the device with private key of the device wherein a device encrypts data for the controller with the private key of the controller.

Therefore, it is to an enhanced GPS receiver that is able to provide encryption feature for the purpose of a secure data communication with flexible application that the present invention is primarily directed.

### SUMMARY OF THE INVENTION

The present invention advantageously provides a method and system for a secure location information transmission in a wireless communication network using an enhanced GPS receiver. As a result, a secure location information communication with flexible application can be achieved.

In one embodiment, a method for communicating data between a mobile device and a terminal is provided. The method includes obtaining location information from a GPS receiver in the mobile device, wherein the location information is representative of a location of the mobile device, and compressing said location information within said GPS receiver. The method further includes obtaining a GPS chip identification number from the GPS receiver, wherein said GPS receiver having a GPS chip, said GPS chip having said GPS chip identification number, said GPS chip identification number uniquely identifying every GPS chip, using the GPS chip identification number as an encryption key to encrypt the compressed location information at the GPS receiver, generating an encrypted compressed location information, transmitting the encrypted compressed location information at the mobile device to said remote terminal (108) over a wireless network by means of Short Message Service (SMS) module, receiving the encrypted location information at the terminal, using the GPS chip identification number as a decryption key to decrypt the encrypted compressed location information at the terminal, and obtaining the location information at the terminal.

In yet another embodiment, an enhanced GPS receiver is provided. The GPS receiver has a unique GPS chip identification number for identifying the GPS receiver. The GPS receiver comprises a GPS chip, said GPS chip having said GPS chip identification number, said GPS chip identification number uniquely identifying each GPS chip. The GPS receiver includes a GPS signal receiving unit, a GPS signal processing unit, a compression module and an encryption module. The GSP signal receiving unit is used to receive GPS signals from GPS satellites. The GPS signal processing unit is coupled to the GPS signal receiving unit and is used to process the GPS signals and obtain location information of the GPS receiver. The compression module is coupled to the GPS signal processing unit for compressing the location information, obtaining compressed location information, and sending the compressed location information to the encryption module. The encryption module is used to encrypt the location information by using the GPS chip identification number as an encryption key and generate an encrypted location information. The GPS receiver is further coupled to a transmitting unit, the transmitting unit being capable of receiving said encrypted location information and transmitting said encrypted location information to a terminal over a wireless network by means of Short Message Service (SMS) module.

In yet another embodiment, a mobile device is provided. The mobile device includes a GPS receiver, a transmitting unit and a display unit. The GPS receiver has a GPS chip identification number and comprises a GPS chip, the GPS chip having the unique GPS chip identification number, the GPS chip identification number uniquely identifying each GPS chip. The GPS receiver includes a GPS signal receiving unit, a GPS signal processing unit, a compression unit and an encryption module. The GPS signal receiving unit receives GPS signals from GPS satellites. The GPS signal processing unit is coupled to the GPS signal receiving unit and is used to process the GPS signals and obtain location information of the GPS receiver from the GPS signals. The compression module is coupled to the GPS signal processing unit for compressing the location information, obtaining compressed location information, and sending the compressed location information to the encryption module. The encryption module is used to encrypt the location information by using the GPS chip identification number as an encryption key and generate an encrypted compressed location information. The transmitting unit comprising a Short Message Service (SMS) module is coupled to the GPS receiver and is used to transmit the encrypted location information over a wireless network by means of Short Message Service (SMS). The displaying unit is coupled to the GPS receiver and is used to display the location information.

In yet another embodiment, a location monitoring system is provided. The location monitoring system includes a mobile device and a terminal for monitoring the mobile device. The mobile device includes a GPS receiver having a unique GPS chip identification number and a first transmitting unit coupled to the GPS receiver. The GPS receiver comprises a GPS chip, the GPS chip having the unique GPS chip identification number, the GPS chip identification number uniquely identifying each GPS chip, and includes a GPS signal receiving unit for receiving GPS signals from GPS satellites, a GPS signal processing unit coupled to the GPS signal receiving unit for processing the GPS signals and obtaining location information of the GPS receiver, a compression module coupled to the GPS signal processing unit for compressing the location information and obtaining compressed location information and an encryption module for encrypting the compressed location information to generate an encrypted location information by using the GPS chip identification number as an encryption key. The first transmitting unit comprising a Short Message Service (SMS) module is used to transmit the encrypted location information over a wireless network by means of Short Message Service (SMS). The terminal includes a first receiving unit for receiving the encrypted location information, a first decryption module coupled to the first receiving unit for decrypting the encrypted compressed location information by using the GPS chip identification number as a decryption key and a first decompression module coupled to said first decryption module for decompressing said compressed location information after said encrypted location information is decrypted.

### BRIEF DESCRIPTION OF THE DRAWINGS

Features and advantages of embodiments of the invention will become apparent as the following Detailed Description proceeds, and upon reference to the Drawings, where like numerals depict like elements, and in which:

FIG. 1 is architecture of a location monitoring system;

FIG. 2 depicts details of the architecture of location monitoring system shown in FIG. 1 according to one embodiment of the present invention;

FIG. 3 is an exemplary code structure for a GPS chip identification number;

FIG. 4 is an exemplary data format for a communication protocol according to one embodiment of the present invention; and

FIG. 5 is a flowchart for secure location information communication according to one embodiment of the present invention.

### DETAILED DESCRIPTION OF THE INVENTION

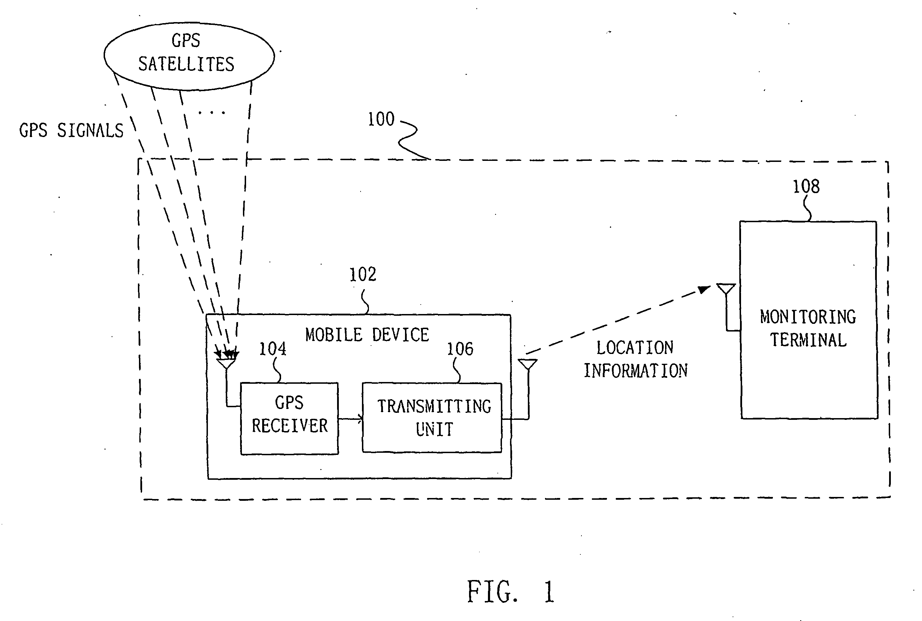

FIG. 1 illustrates architecture of a location monitoring system 100 according to one embodiment of the invention. The system 100 includes a mobile device 102 and a monitoring terminal 108 (also known as a terminal, or control center). The mobile device 102 can be a car, a personal digital assistant or a cell phone, etc. In operation, the monitoring terminal 108 monitors the mobile device 102 by receiving location information transmitted from the mobile device 102. Upon receiving the location information, the monitoring terminal 108 may be capable of sending out response signal or control signal to the mobile device 102 for further action.

The mobile device 102 at least includes a GPS receiver 104 and a transmitting unit 106 coupled to the GPS receiver 104. The GPS receiver 104 acquires GPS signals transmitted from a plurality of GPS satellites. After acquiring the GPS signals, the GPS receiver 104 further keeps track of the GPS signals, processes the GPS signals, and generates the location information indicating the present location of the mobile device 102. The transmitting unit 106 in the mobile device transmits the location information received by the GPS receiver to a monitoring terminal over a wireless network. The wireless network includes, but not limited to, a GSM (Global System for Mobil Communications) network, GPRS (General Packet Radio Service) network, and CDMA (Code Division Multiple Access) network, etc. The monitoring terminal 108 receives the location information of the mobile device 102 and may further be capable of sending out commands (not shown in FIG. 1) to the mobile device 102 over the wireless network based on the received location information. The location information can be transmitted by means of a SMS (Short Message Service) module or through a serial port of the mobile device. In some embodiments, the mobile device 102 may further includes a display unit for displaying the location information.

It is understood by those skilled in the art that the mobile device 102 may further includes a receiving unit (not shown in FIG. 1) to receive the commands or response from the monitoring terminal 108. It should be further noted that the location monitoring system 100 may support a plurality of mobile device. All of the mobile devices may transmit their corresponding location information to the monitoring terminal 108. Accordingly, traces of the plurality of mobile devices may well be monitored by the monitoring terminal. Furthermore, it is readily appreciated by those skilled in the art that the monitoring terminal may also be in a form of another mobile device having a GPS receiver, a transmitting unit for transmitting response message or the location information indicating the location of itself to the mobile device 102 and a receiving unit for receiving the location information from the mobile device 102.

Advantageously, the GPS receiver 104 is an enhanced receiver according to one embodiment of the present invention. It provides at least an encryption module to encrypt the location information using a GPS chip identification number as a key. The following description is a detailed explanation of an implementation of this embodiment of the present invention.

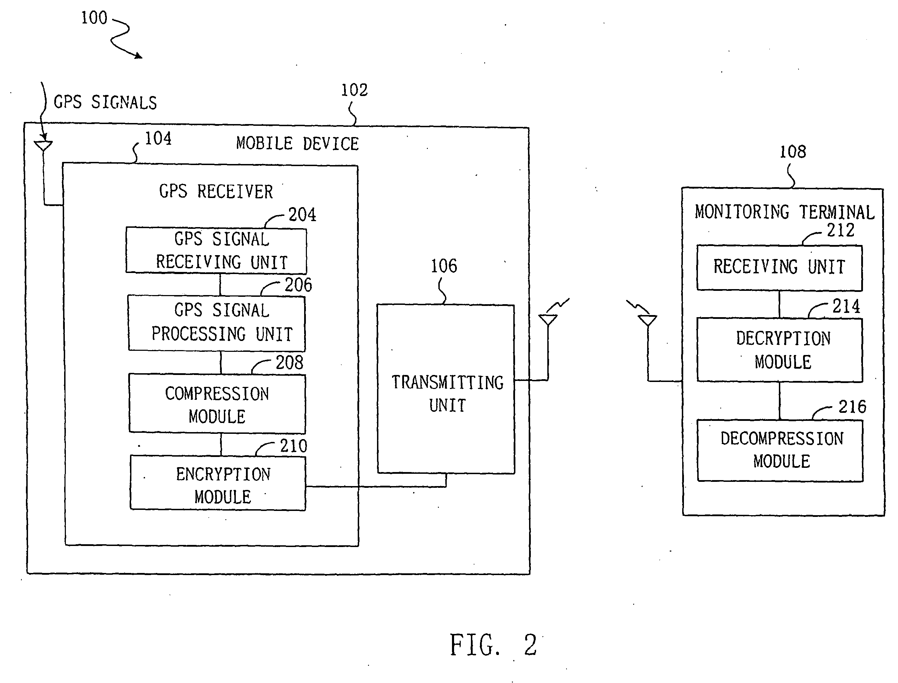

FIG. 2 illustrates a detailed block diagram of system 100. The GPS receiver 104 includes a GPS signal receiving unit 204, a GPS signal processing unit 206, an optional compression module 208, and an encryption module 210. The GPS signal receiving unit 204 receives the GPS signal and converts the frequency of the GPS signal to an intermediate frequency level. The receiving unit 204 can be a RF front end module which is known by those skilled in the art. A GPS signal processing unit 206 coupled to the GPs signal receiving unit 204 is used to further process the GPS signal. The processing unit 206 may include a plurality of modules, such as an acquisition module, a tracking module, and a post-processing module, known by those skilled in the art. Based on the received GPS signal, the processing unit 206 may output location information representative of the user's current location or the location of the mobile device 102.

Usually, the signal processing unit 204 and GPS signal receiving unit 206 are integrated in a GPS chip. The GPS chip has a unique number provided by a GPS vendor and is stored permanently in a FLASH memory of the GPS chip. This number can be requested by the user from the GPS receiver system. This unique number is referred to as a GPS chip identification number herein.

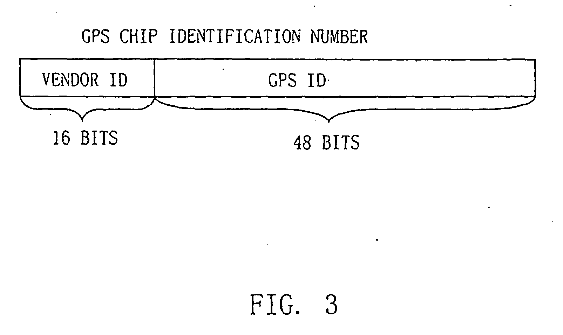

FIG. 3 illustrates a code structure of the GPS chip identification number. In one embodiment, this GPS identification number can be a digital number having a data length of 64-bits. The number includes two parts. The high 16-bits represents vendor ID, and the low 48-bits is used to identify each GPS chip. Consequently, the GPS chip identification number can uniquely identify each GPS chip manufactured by each GPS vendor. Advantageously, the present invention utilizes the GPS chip identification number as an encryption key to encrypt the location information in an encryption module 210 of the GPS receiver. Only the authorized receiving terminals know the GPS chip identification number. These receiving terminals may use this identification number as a decryption code to decrypt the location information. Therefore, by using the GPS chip identification number as an encryption or decryption key, the location information can be kept confidential before it is received and decrypted by the intended receiving terminals. Consequently, a secure data communication can be realized. In this case, the monitoring terminal has the GPS chip identification numbers of all the mobile devices in advance. Therefore, it may be able to receive the location information from each mobile device safely.

There are two ways to obtain the GPS chip identification number. A GPS software may be used to obtain the GPS chip identification number from the GPS chip when the GPS system is initially booted. Alternatively, a GPS user may assign a predefined unique identification number and upload it to GPS system as the GPS chip identification number.

Turning back to FIG. 2, for the purpose of delivering a large throughput of the transmission data, the present invention optionally provides a compression module 208 before the encryption module 210. The compression module 208 receives the location information from the signal processing unit 206, compresses the location information and delivers the compressed location information to the encryption module 210. In one embodiment, the compression algorithm can be LMZA (Lempel and Ziv Modified Compression Algorithm). LZMA provides high compression ratio and very fast decompression, so it is very suitable for embedded applications. Of course, it should be noted that the compression can also be performed after encryption, while, at the receiving terminal, the decompression can be performed before decryption. However, the data length will be longer compared with the method described in FIG. 2.

The encryption module 210 receives the compression location information and encrypts the location information using the GPS chip identification number as an encryption key, and sends the encrypted location information to the transmitting unit 106. In one embodiment, the user may selectively choose to enable the encryption feature or disable the encryption feature. A symmetric encryption algorithm is preferred in a wireless network application. The symmetric encryption algorithm includes, but not limited to, DES (Data Encryption Standard) algorithm and MD5 algorithm (Message-Digest Algorithm version.5), etc. In addition, in order to have a more secure data communication environment, WPKI (Wireless Public Key Infrastructure) can be utilized. The WPKI is commonly used in wireless business transaction application. Advantageously, the present invention adopts this algorithm in GPS fields for a high level security request.

The monitoring terminal 108 includes a receiving unit 212, a decryption module 214, and an optional decompression module 216. The receiving unit 212 receives the encrypted location information transmitted from the mobile device 102. The decryption module 214 receives the encrypted location information, and decrypts the location information using the GPS chip identification number as a decryption key. The decompression module 216 is capable of decompressing the output of decryption module 214 if the location information is compressed before transmission. After the data is decompressed, the location information is obtained.

In yet another embodiment, the monitoring terminal 108 may not only be able to receive the location information from the mobile device 102, but may also be able to send out messages, commands, or location information. In this case, the monitoring terminal may further include a transmitting unit, an optional compression module, and an optional encryption module if the commands, messages or location information need to be protected. In this case, the mobile device 102 may further include a receiving unit for receiving the commands, messages, or location information from the monitoring terminal 108. The GPS receiver 104 may further include an optional decryption module coupled to the receiving unit for decrypting the data from the monitoring terminal, and an optional decompression module for decompressing the data from the monitoring terminal accordingly.

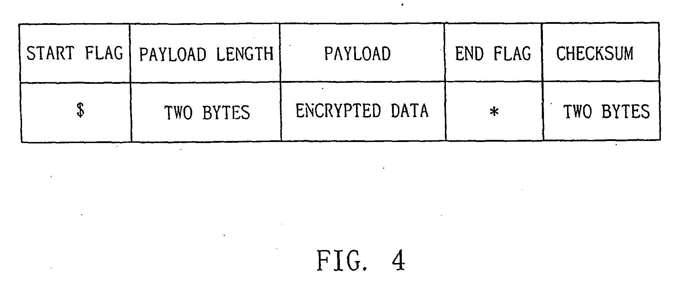

As previously stated, the data is transmitted through serial port or SMS module. The data is exchanged according to a communication protocol. FIG. 4 is the communication protocol illustrating the format of the data in transmission according to one embodiment of the present invention. The data format includes several segments: a start flag, a payload length segment, a payload segment, an end flag and a checksum segment. The start flag is a one-bit symbol representing the start of a message. The payload length is a two-byte data indicating the length of the data. The payload segment contains the data, which may be encrypted. The end flag is a one-bit symbol representing the end of a message. The checksum segment is a two-byte data for data verification purpose. The payload length, payload and checksum data segment are transmitted with high order byte first followed by the low order byte.

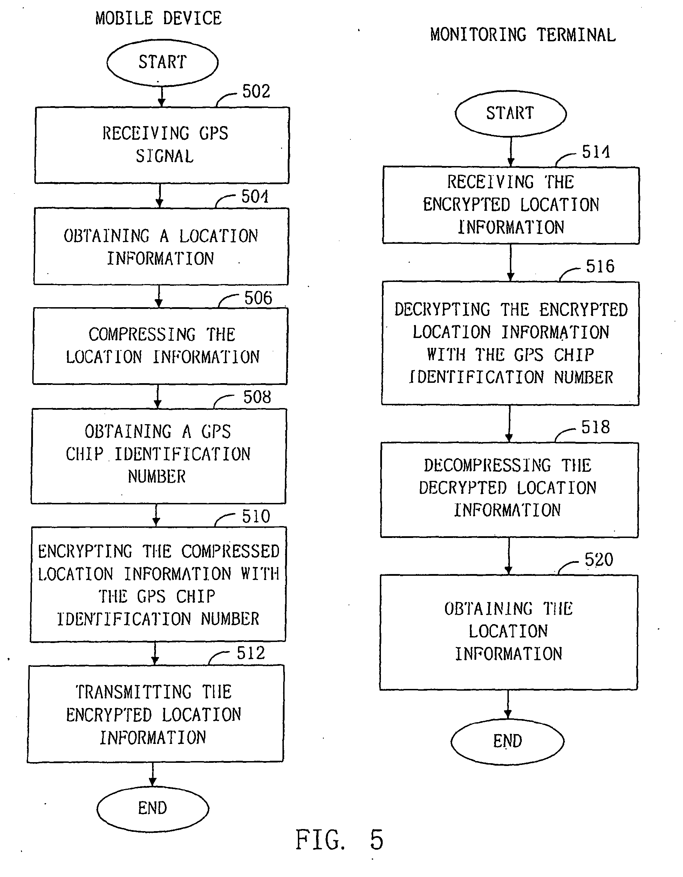

FIG. 5 illustrates a flowchart for secure location information communication according to one embodiment of the present invention. At the mobile device side, the GPS receiver receives the GPS signal from GPS satellites, step 502, and obtains the location information of the mobile device, step 504. After obtaining the location information, the location information can be optionally compressed in a compression module in the GPS receiver, step 506. In order to encrypt the location information, a GPS chip identification number is obtained, step 508. Then, the encryption module encrypts the location information with the GPS chip identification number, step 510. A transmitting unit coupled to the encryption module transmits the encrypted location information over a wireless network, step 512. At the receiving terminal (monitoring terminal), a receiving unit in the receiving terminal receives the encrypted location information, step 514. Then, a decryption module decrypts the encrypted location information with the same GPS chip identification number, step 516. If the location information is compressed before transmission, a decompression module in the receiving terminal will be used to decompress the compressed location information, step 518. After compression, the location information can be obtained, step 520.

## Claims

1. A method for communicating location information between a mobile device (102) and a remote terminal (108), said mobile device having a Global Positioning System (GPS) receiver (104) comprising:
obtaining location information from said GPS receiver (104), said location information representing a location of said mobile device (102);
compressing said location information within said GPS receiver (104);
obtaining a GPS chip identification number from said GPS receiver (104);
using said GPS chip identification number as an encryption key to encrypt said compressed location information into an encrypted compressed location information within said GPS receiver (104), wherein said GPS receiver having a GPS chip, said GPS chip having said GPS chip identification number, said GPS chip identification number uniquely identifying every GPS chip;
transmitting said encrypted compressed location information from said mobile device (102) to said remote terminal (108) over a wireless network by means of Short Message Service (SMS) module;
receiving said encrypted location information at said terminal (108);
using said GPS chip identification number as a decryption key to decrypt said encrypted compressed location information at said terminal; and
obtaining said location information at said terminal.

2. The method of claim 1, wherein obtaining said GPS chip identification number comprising providing a unique identification number of said GPS chip as said GPS chip identification number, said unique identification number being initially provided by a GPS chip vendor.

3. The method of claim 1, wherein obtaining said GPS chip identification number comprising providing a user-defined identification number as said GPS chip identification number.

4. The method of claim 1, wherein the encrypting is performed based on Data Encryption Standard (DES) encryption algorithm.

5. The method of claim 1, wherein the encrypting is performed based on Wireless Public Key Infrastructure (WPKI) encryption system.

6. The method of claim 1, wherein the encrypting is performed based on Message-Digest Algorithm 5 (MD5) encryption algorithm.

7. A Global Positioning System (GPS) receiver (104) having a GPS chip identification number comprising:
a GPS chip, said GPS chip having said GPS chip identification number, said GPS chip identification number uniquely identifying each GPS chip;
a GPS signal receiving unit (204) for receiving GPS signals from GPS satellites;
a GPS signal processing unit (206) coupled to said GPS signal receiving unit for processing said GPS signals and obtaining location information of said GPS receiver (104); an encryption module (210) for encrypting said location information by using said GPS chip identification number as an encryption key and generating an encrypted location information;
a compression module (208) coupled to said GPS signal processing unit (206) for compressing said location information, obtaining a compressed location information, and sending said compressed location information to said encryption module, wherein
said receiver (104) being further coupled to a transmitting unit (106), said transmitting unit being capable of receiving said encrypted location information and transmitting said encrypted location information to a remote terminal (108) over a wireless network by means of Short Message Service (SMS) module.

8. The receiver of claim 7, wherein said GPS ID identification number being a unique identification number provided by a GPS vendor.

9. The receiver of claim 7, wherein said GPS ID identification number is a use-defined identification number.

10. The receiver of claim 7, wherein said encryption module (210) is performed based on Data Encryption Standard (DES) encryption algorithm.

11. The receiver of claim 7, wherein said encryption module (210) is performed based on Wireless Public Key Infrastructure (WPKI) encryption system.

12. The receiver of claim 7, wherein said encryption module (210) is performed based on Message-Digest Algorithm 5 (MD5) encryption algorithm.

13. A mobile device (102) capable of receiving GPS signals and calculating location information based on said received GPS signals, comprising:
a GPS receiver (104) having a GPS identification number, wherein said GPS receiver having a GPS chip, said GPS chip having a GPS chip identification number, said GPS chip identification number uniquely identifying each GPS chip, said GPS receiver (104) further comprises: a GPS signal receiving unit (204) for receiving GPS signals from GPS satellites; a GPS signal processing unit (206) coupled to said GPS signal receiving unit for processing said GPS signals and obtaining location information of said GPS receiver from said GPS signals; an encryption module (210) for encrypting said location information by using said GPS chip identification number as an encryption key and generating an encrypted location information; a compression module (208) coupled to said GPS signal processing unit (206) for compressing said location information, obtaining a compressed location information, and sending said compressed location information to said encryption module (210); and
a transmitting unit (106) coupled to said GPS receiver (104) for transmitting said encrypted location information to a remote terminal (108) over a wireless network by means of Short Message Service (SMS) module; and
a display unit coupled to said GPS receiver (104) for displaying said location information.

14. The mobile device of claim 13, wherein said encryption module is performed based on Data Encryption Standard (DES) encryption algorithm.

15. The mobile device of claim 13, wherein said encryption module is performed based on Wireless Public Key Infrastructure (WPKI) encryption system.

16. The mobile device of claim 13, wherein said encryption module is performed based on Message-Digest Algorithm 5 (MD5) encryption algorithm.

17. A location monitoring system (100), comprising:
a mobile device (102) comprising:
a Global Positioning System (GPS) receiver (104) having a GPS chip identification number, wherein said GPS receiver having a GPS chip, said GPS chip having said GPS chip identification number, said GPS chip identification number
uniquely identifying each GPS chip; said GPS receiver further having a GPS signal receiving unit (204) for receiving GPS signals from GPS satellites; a GPS signal processing unit (206) coupled to said GPS signal receiving unit for processing said GPS signals and obtaining location information of said GPS receiver, and an encryption module (210) for encrypting said location information to generate an encrypted location information by using said GPS chip identification number as an encryption key; wherein said GPS receiver further comprising a first compression module (208) coupled to said GPS signal processing unit (206) for compressing said location information, obtaining a compressed location information, and sending said
compressed location information to said encryption module (210) ; and a first transmitting unit (106) coupled to said GPS receiver (104) for transmitting said
encrypted compressed location information over a wireless network by means
of Short Message Service (SMS) module;
and a terminal (108) for monitoring said mobile device, comprising:
a first receiving unit (212) for receiving said encrypted compressed location information;
a first decryption module (214) coupled to said first receiving unit for decrypting said encrypted compressed location information by using said GPS chip identification number as a decryption key; and
a first decompression module (216) coupled to said first decryption module for decompressing said compressed location information after said encrypted location information is decrypted.

18. The location monitoring system of claim 17, wherein said encryption module is based on Data Encryption Standard (DES) encryption algorithm.

19. The location monitoring system of claim 17, wherein said encryption module is based on Wireless Public Key Infrastructure (WPKI) encryption system.

20. The location monitoring system of claim 17, wherein said encryption module is based on Message-Digest Algorithm 5 (MD5) encryption algorithm.

21. The location monitoring system of claim 17, wherein said mobile device (102) further comprising a second receiving unit for receiving a terminal data from said terminal.

22. The location monitoring system of claim 21, wherein said GPS receiver (104) further comprising a second decryption module coupled to said second receiving unit for decrypting said terminal data by using a terminal identification number as a decryption key provided by said terminal if said terminal data is encrypted with said terminal identification number.

23. The location monitoring system of claim 21, wherein said GPS receiver (104) further comprising a second decompression module for decompressing said terminal data if said terminal data is compressed.

## Patentansprüche

1. Verfahren zum Kommunizieren von Positionsinformationen zwischen einem Mobilgerät (120) und einem Fernterminal (108), wobei das Mobilgerät einen Empfänger (104) eines Globalen Positionssystems (GPS) hat, umfassend:
das Beziehen von Positionsinformationen von dem GPS-Empfänger (104), wobei die Positionsinformationen einen Ort des Mobilgeräts (102) repräsentieren;
das Komprimieren der Positionsinformationen in dem GPS-Empfänger (104);
das Beziehen einer GPS-Chip-Identifikationsnummer von dem GPS-Empfänger (104);
das Verwendung der GPS-Chip-Identifikationsnummer als Chiffrierschlüssel zum Chiffrieren der komprimierten Positionsinformationen in chiffrierte komprimierte Positionsinformationen in dem GPS-Empfänger (104), wobei der GPS-Empfänger einen GPS-Chip hat, der GPS-Chip die GPS-Chip-Identifikationsnummer trägt und die GPS-Chip-Identifikationsnummer jeden GPS-Chip einmalig identifiziert;
das Übertragen der chiffrierten komprimierten Positionsinformationen von dem Mobilgerät (102) über ein Drahtlosnetzwerk mittels Kurzmitteilungsdienstmodul (SMS-Modul) zu dem Fernterminal;
das Empfangen der chiffrierten Positionsinformationen an dem Terminal (108);
das Verwenden der GPS-Chip-Identifikationsnummer als Dechiffrierschlüssel zum Dechiffrieren der chiffrierten komprimierten Positionsinformationen an dem Terminal; und
das Beziehen der Positionsinformationen an dem Terminal.

2. Verfahren nach Anspruch 1, wobei des Beziehen der GPS-Chip-Identifikationsnummer das Bereitstellen einer einmaligen Identifikationsnummer des GPS-Chip als die GPS-Chip-Identifikationsnummer umfasst, wobei die einmalige Identifikationsnummer zu Beginn durch einen GPS-Chip-Anbieter bereitgestellt wird.

3. Verfahren nach Anspruch 1, wobei das Beziehen der GPS-Chip-Identifikationsnummer das Bereitstellen einer benutzerdefinierten Identifikationsnummer als die GPS-Chip-Identifikationsnummer umfasst.

4. Verfahren nach Anspruch 1, wobei das Chiffrieren auf der Basis des Data Encryption Standard (DES)-Chiffrieralgorithmus erfolgt.

5. Verfahren nach Anspruch 1, wobei das Chiffrieren auf der Basis des Wireless Public Key Infrastructure (WKPI)-Chiffriersystems erfolgt.

6. Verfahren nach Anspruch 1, wobei das Chiffrieren auf der Basis eines Message-Digest Algorithmus 5 (MD5)-Chiffrieralgorithmus erfolgt.

7. Empfänger (104) eines Globalen Positionssystems (GPS) mit einer GPS-Chip-Identifikationsnummer, umfassend:
einen GPS-Chip, wobei der GPS-Chip die GPS-Identifikationsnummer besitzt und die GPS-Chip-Identifikationsnummer jeden GPS-Chip einmalig identifiziert;
eine GPS-Signalempfangseinheit (204) für den Empfang von GPS-Signalen von GPS-Satelliten;
eine GPS-Signalverarbeitungseinheit (206), die mit der GPS-Signalempfangseinheit verbunden ist zum Verarbeiten der GPS-Signale und zum Beziehen von Positionsinformationen von dem GPS-Empfänger (104); ein Chiffriermodul (210) zum Chiffrieren der Positionsinformationen durch Verwendung der GPS-Chip-Identifikationsnummer als Chiffrierschlüssel und zum Erzeugen einer chiffrierten Positionsinformation;
ein Komprimierungsmodul (208), das mit der GPS-Signalverarbeitungseinheit (206) verbunden ist zum Komprimieren der Positionsinformationen, zum Beziehen einer komprimierten Positionsinformation und zum Senden der komprimierten Positionsinformation an das Chiffriermodul,
wobei der Empfänger (104) ferner mit einer Sendeeinheit (106) verbunden ist, die die chiffrierte Positionsinformation empfangen und die chiffrierte Positionsinformation über ein Drahtlosnetzwerk durch ein Kurzmitteilungs-(SMS)-Servicemodul an ein Fernterminal (108) senden kann.

8. Empfänger nach Anspruch 7, wobei die GPS-ID-Identifikationsnummer eine einmalige Identifikationsnummer ist, die durch den GPS-Anbieter bereitgestellt wird.

9. Empfänger nach Anspruch 7, wobei die GPS-ID-Identifikationsnummer eine benutzerdefinierte Identifikationsnummer ist.

10. Empfänger nach Anspruch 7, wobei das Chiffriermodul (210) auf der Basis des Data Encryption Standard (DES)-Chiffrieralgorithmus ausgeführt ist.

11. Empfänger nach Anspruch 7, wobei das Chiffriermodul (210) auf der Basis des Wireless Public Key Infrastructure (WKPI)-Chiffriersystems ausgeführt ist.

12. Empfänger nach Anspruch 7, wobei das Chiffriermodul (210) auf der Basis des Message-Digest Algorithmus 5 (MD5)-Chiffrieralgorithmus ausgeführt ist.

13. Mobilgerät (102), das GPS-Signal empfangen und Positionsinformationen auf der Basis der empfangenen GPS-Signale berechnen kann, umfassend:
einen GPS-Empfänger (104) mit einer GPS-Identifikationsnummer, wobei der GPS-Empfänger einen GPS-Chip hat, der GPS-Chip eine GPS-Chip-Identifikationsnummer besitzt, die GPS-Chip-Identifikationsnummer jeden GPS-Chip einmalig identifiziert und der GPS-Empfänger (104) ferner umfasst: eine GPS-Signal-Empfangseinheit (204) für den Empfang von GPS-Signalen von GPS-Satelliten; eine GPS-Signalverarbeitungseinheit (206), die mit der GPS-Signalempfangseinheit verbunden ist zum Verarbeiten der GPS-Signale und zum Beziehen von Positionsinformationen des GPS-Empfängers von den GPS-Signalen; ein Chiffriermodul (210) zum Chiffrieren der Positionsinformationen durch Verwendung der GPS-Chip-Identifikationsnummer als Chiffrierschlüssel und zum Erzeugen einer chiffrierten Positionsinformation; ein Komprimierungsmodul (208), das mit der GPS-Signalverarbeitungseinheit (206) verbunden ist zum Komprimieren der Positionsinformationen, zum Beziehen einer komprimierten Positionsinformation und zum Senden der komprimierten Positionsinformation an das Chiffriermodul (210); und
eine Sendeinheit (106), die mit dem GPS-Empfänger (104) verbunden ist zum Senden der chiffrierten Positionsinformation über ein Drahtlosnetzwerk mittels Kurzmitteilungs-(SMS)-Service an ein Fernterminal (105); und
eine Displayeinheit, die mit dem GPS-Empfänger (104) verbunden ist zum Anzeigen der Positionsinformation.

14. Mobilgerät nach Anspruch 13, wobei das Chiffriermodul auf der Basis des Data Encryption Standard (DES)-Chiffrieralgorithmus ausgeführt ist.

15. Mobilgerät nach Anspruch 13, wobei das Chiffriermodul auf der Basis des Wireless Public Key Infrastructure (WKPI)-Chiffriersystems ausgeführt ist.

16. Mobilgerät nach Anspruch 13, wobei das Chiffriermodul auf der Basis des Message-Digest Algorithmus 5 (MD5)-Chiffrieralgorithmus ausgeführt ist.

17. Positionsüberwachungssystem (100), umfassend:
ein Mobilgerät (102), umfassend:
einen Empfänger (104) eines Globalen Positionssystems (GPS) mit einer GPS-Identifikationsnummer, wobei der GPS-Empfänger einen GPS-Chip hat, der GPS-Chip eine GPS-Chip-Identifikationsnummer besitzt, die GPS-Chip-Identifikationsnummer jeden GPS-Chip einmalig identifiziert ;
der GPS-Empfänger ferner eine GPS-Signal-Empfangseinheit (204) für den Empfang von GPS-Signalen von GPS-Satelliten; eine GPS-Signalverarbeitungseinheit (206), die mit der GPS-Signalempfangseinheit verbunden ist zum Verarbeiten der GPS-Signale und zum Beziehen von Positionsinformationen des GPS-Empfängers von den GPS-Signalen und ein Chiffriermodul (210) zum Chiffrieren der Positionsinformationen durch Verwendung der GPS-Chip-Identifikationsnummer als Chiffrierschlüssel und zum Erzeugen einer chiffrierten Positionsinformation umfasst; wobei der GPS-Empfänger ferner ein erstes Komprimierungsmodul (208) umfasst, das mit der GPS-Signalverarbeitungseinheit (206) verbunden ist, zum Komprimieren der Positionsinformationen, zum Beziehen einer komprimierten Positionsinformation und zum Senden der komprimierten Positionsinformation an das Chiffriermodul (210); und
eine erste Sendeinheit (106), die mit dem GPS-Empfänger (104) verbunden ist zum Senden der chiffrierten Positionsinformation über ein Drahtlosnetzwerk mittels Kurzmitteilungs-(SMS)-Service; und
ein Terminal (108) zum Überwachen des Mobilgeräts, umfassend: eine erste Empfangseinheit (212) für den Empfang der chiffrierten komprimierten Positionsinformation;
ein erstes Chiffriermodul (214), das mit der ersten Empfangseinheit verbunden ist zum Dechiffrieren der chiffrierten komprimierten Positionsinformation durch Verwendung der GPS-Chip-Identifikationsnummer als Dechiffrierschlüssel; und
ein erstes Dekomprimierungsmodul (216), das mit dem ersten Dechiffriermodul verbunden ist zum Dekomprimieren der komprimierten Positionsinformation nach dem Dechiffrieren der chiffrierten Positionsinformation.

18. Positionsüberwachungssystem nach Anspruch 17, wobei das Chiffriermodul auf der Basis des Data Encryption Standard (DES)-Chiffrieralgorithmus ausgeführt ist.

19. Positionsüberwachungssystem nach Anspruch 17, wobei das Chiffriermodul auf der Basis des Wireless Public Key Infrastructure (WKPI)-Chiffriersystems ausgeführt ist.

20. Positionsüberwachungssystem nach Anspruch 17, wobei das Chiffriermodul auf der Basis des Message-Digest Algorithmus 5 (MD5)-Chiffrieralgorithmus ausgeführt ist.

21. Positionsüberwachungssystem nach Anspruch 17, wobei das Mobilgerät (102) ferner eine zweite Empfangseinheit für den Empfang von Terminaldaten von dem Terminal umfasst.

22. Positionsüberwachungssystem nach Anspruch 21, wobei der GPS-Empfänger (104) ferner ein zweites Chiffriermodul umfasst, das mit der zweiten Empfangseinheit verbunden ist, zum Dechiffrieren der Terminaldaten durch die Verwendung einer Terminal-Identifikationsnummer als Dechiffrierschlüssel, die durch das Terminal bereitgestellt wird, wenn die Terminaldaten mit der Terminal-Identifikationsnummer chiffriert werden.

23. Positionsüberwachungssystem nach Anspruch 21, wobei der GPS-Empfänger (104) ferner ein zweites Dekomprimierungsmodul umfasst zum Dekomprimieren der Terminaldaten, wenn die Terminaldaten komprimiert sind.

## Revendications

1. Procédé destiné à communiquer des informations de position entre un dispositif mobil (102) et un terminal distant (108), ledit dispositif mobil comprenant un récepteur (104) d'un système de localisation mondial (GPS), le procédé comprenant :
obtenir des informations de position, lesdites informations de position représentant la position dudit dispositif mobile (102);
compresser ladite information de position dans le récepteur GPS (104);
obtenir du récepteur GPS (104) un numéro d'identification du chip GPS;
utiliser ledit numéro d'identification de chip GPS comme une clé de cryptage pour crypter dans le récepteur GPS (104) ladite information de position compressée en une information de position compressée cryptée, ledit récepteur GPS incluant un chip GPS, ledit chip GPS incluant ledit numéro d'identification du chip GPS, ledit numéro d'identification du chip GPS identifiant uniquement chaque chip GPS;
transmettre ladite information de position compressée cryptée du dispositif mobile (102) au terminal distant (108) via un réseau sans fil par le biais d'un module de service texto (SMS);
recevoir audit terminal (108) ladite information de position cryptée;
utiliser ledit numéro d'identification du chip GPS comme la clé de décryptage pour décrypter audit terminal ladite information de position compressée cryptée; et
obtenir audit terminal ladite information de position.

2. Procédé selon la revendication 1, dans lequel l'étape d'obtenir le numéro d'identification du chip GPS comprend l'étape de fournir un numéro unique d'identification du chip GPS comme ledit numéro d'identification du chip GPS, ledit numéro unique d'identification du chip GPS étant fourni par un fournisseur de chip GPS.

3. Procédé selon la revendication 1, dans lequel l'étape d'obtention du numéro d'identification du chip GPS comprend l'étape de fournir un numéro personnalisé d'identification comme le numéro d'identification du chip GPS.

4. Procédé selon la revendication 1, dans lequel le cryptage est fait basé sur l'algorithme de cryptage de Data Encryption Standard (DES).

5. Procédé selon la revendication 1, dans lequel le cryptage et fait basé sur le système de cryptage Wireless Public Key Infrastructure (WPKI).

6. Procédé selon la revendication 1, dans lequel le cryptage et fait basé sur l'algorithme de cryptage de Message Digest Algorithm 5 (MD5).

7. Récepteur (104) d'un système de localisation mondial (GPS) comprenant un numéro d'identification du chip GPS, comprenant:
un chip GPS, ledit chip GPS contenant ledit numéro d'identification du chip GPS, ledit numéro d'identification du chip GPS identifiant uniquement chaque chip GPS;
une unité de réception des signaux GPS (204) pour recevoir de satellites GPS des signaux GPS;
une unité de traitement des signaux GPS (206) couplée à l'unité de réception des signaux GPS pour traiter lesdits signaux GPS et pour obtenir dudit récepteur GPS (104) des informations de position; un module de cryptage (210) pour crypter ladite information de position en utilisant ledit numéro d'identification du chip GPS comme une clé de cryptage et pour générer une information de position cryptée;
un module de compression (208) couplé à l'unité de traitement de signaux GPS (206) pour compresser ladite information de position, pour obtenir une information de position compressée et pour envoyer ladite information de position compressée au module de cryptage,
dans lequel
ledit récepteur (104) est en outre couplé à l'unité de transmission (106), ladite unité de transmission étant capable de recevoir ladite information de position cryptée et de transmettre ladite information de position cryptée au terminal distant (108) via un réseau sans fil par le biais d'un module de service texto (SMS).

8. Récepteur selon la revendication 7, dans lequel le numéro ID d'identification GPS est un numéro d'identification unique fourni par le fournisseur GPS.

9. Récepteur selon la revendication 7, dans lequel le numéro ID d'identification GPS est un numéro d'identification personnalisé.

10. Récepteur selon la revendication 7, dans lequel le module de cryptage (210) est réalisé sur la base de l'algorithme de cryptage de Data Encryption Standard (DES).

11. Récepteur selon la revendication 7, dans lequel le module de cryptage (210) est réalisé sur la base du système de cryptage Wireless Public Key Infrastructure (WPKI).

12. Récepteur selon la revendication 7, dans lequel le module de cryptage (210) est réalisé sur la base de l'algorithme de cryptage de Message Digest Algorithm 5 (MD5).

13. Dispositif mobil (102) capable de recevoir des signaux GPS et de calculer des informations de position sur la base desdits signaux GPS reçus, comprenant:
un récepteur GPS (104) contenant un numéro d'identification GPS, dans lequel ledit récepteur GPS comprend un chip GPS, ledit chip GPS inclue ledit numéro d'identification du chip GPS, ledit numéro d'identification du chip GPS identifiant uniquement chaque chip GPS; ledit récepteur GPS (104) comprenant en outre:
une unité de réception des signaux GPS (204) pour recevoir de satellites GPS des signaux GPS; une unité de traitement des signaux GPS (206) couplée à l'unité de réception des signaux GPS pour traiter lesdits signaux GPS et pour obtenir dudit récepteur GPS (104) des informations de position; un module de cryptage (210) pour crypter ladite information de position en utilisant ledit numéro d'identification du chip GPS comme une clé de cryptage et pour générer une information de position cryptée;
un module de compression (208) couplé à l'unité de traitement des signaux GPS (206) pour compresser ladite information de position, pour obtenir une information de position compressée et pour envoyer ladite information de position compressée au module de cryptage:
dans lequel
une unité de transmission (106) couplée au récepteur GPS (104) pour transmettre ladite information de position cryptée au terminal distant (108) via un réseau sans fil par le biais d'un module de service texto (SMS); et
une unité d'affichage couplée au récepteur GPS (104) pour afficher ladite information de position.

14. Dispositif mobil selon la revendication 13, dans lequel le module de cryptage est réalisé sur la base de l'algorithme de cryptage de Data Encryption Standard (DES).

15. Dispositif mobil selon la revendication 13, dans lequel le module de cryptage est réalisé sur la base du système de cryptage Wireless Public Key Infrastructure (WPKI).

16. Dispositif mobil selon la revendication 13, dans lequel le module de cryptage est réalisé sur la base de l'algorithme de cryptage de Message Digest Algorithm 5 (MD5).

17. Système de surveillance de position (100), comprenant:
un dispositif mobil (102), comprenant:
un récepteur (104) d'un système de localisation mondial (GPS) contenant un numéro d'identification du chip GPS, dans lequel ledit récepteur GPS comprend un chip GPS, ledit chip GPS contenant ledit numéro d'indentification, ledit numéro d'identification identifiant uniquement chaque chip GPS ; ledit récepteur GPS comprenant en outre une unité de réception des signaux GPS (204) pour recevoir de satellites des signaux GPS ; une unité de traitement des signaux GPS (206) couplée à ladite unité de réception des signaux GPS pour traiter les signaux GPS et pour obtenir du récepteur GPS des informations de position, et un module de cryptage (210) pour crypter ladite information de position pour générer une information de position cryptée en utilisant le numéro d'identification du chip GPS comme une clé de cryptage ;
dans lequel le récepteur GPS comprend en outre un premier module de compression (208) couplé à l'unité de traitement des signaux GPS (206) pour compresser ladite information de position, pour obtenir une information de position compressée et pour envoyer ladite information de position compressée au module de cryptage (210) et une première unité de transmission (106) couplée audit récepteur GPS (104) pour transmettre ladite information de position compressée via un réseau sans fil par le biais d'un module de service texto (SMS) ;
et un terminal (108) pour surveiller ledit dispositif mobil, comprenant :
une première unité de réception (212) pour recevoir ladite information de position cryptée compressée ;
un premier module de décryptage (214) couplé à la première unité pour décrypter ladite information de position cryptée en utilisant ledit numéro d'identification du chip GPS comme une clé de décryptage ; et un premier module de décompression (216) couplé au premier module de cryptage pour décompresser ladite information de position compressée après ladite information de position cryptée est décryptée.

18. Système de surveillance de position selon la revendication 17, dans lequel le module de cryptage est réalisé sur la base de l'algorithme de cryptage de Data Encryption Standard (DES).

19. Système de surveillance de position selon la revendication 17, dans lequel le module de cryptage est réalisé sur la base du système de cryptage Wireless Public Key Infrastructure (WPKI).

20. Système de surveillance de position selon la revendication 17, dans lequel le module de cryptage est réalisé sur la base de l'algorithme de cryptage de Message Digest Algorithm 5 (MD5).

21. Système de surveillance de position selon la revendication 17, dans lequel le dispositif mobile (102) comprend en outre une deuxième unité destinée à recevoir du terminal des données de terminal.

22. Système de surveillance de position selon la revendication 21, dans lequel le récepteur GPS (104) comprend en outre un deuxième module de décryptage couplé à la deuxième unité de réception pour décrypter les données de terminal en utilisant un numéro d'identification du terminal comme une clé de décryptage fournie par ledit terminal si les données de terminal sont encryptées avec ce numéro d'identification du terminal.

23. Système de surveillance de position selon la revendication 21, dans lequel le récepteur GPS (104) comprend en outre un deuxième module de compression destiné à compresser lesdites données de terminal si lesdites données de terminal sont compressées.
